# EUROPEAN PATENT APPLICATION

(11) **EP 4 610 961 A1**
(43) Date of publication of application: **03.09.2025**
(21) Application number: 25157571.8
(22) Date of filing: 13.02.2025
(51) Int. Cl.: G08G 5/21, G08G 5/26, G08G 5/51, G08G 5/80

(54) **SYSTEMS AND METHODS FOR MONITORING AIRCRAFT AT AN AIRPORT**

(30) Priority: 28.02.2024 US 202418590183
(71) Applicant: The Boeing Company, Arlington, VA 22202 (US)
(72) Inventor: BHARADWAJA, Ajaya Srikanta, ARLINGTON, 22202 (US); NARASIMHULU, Veeresh Kumar Masaru, ARLINGTON, 22202 (US)
(74) Representative: Plasseraud IP

(57) **Abstract**

A system and a method include a user interface having a display. A control unit is configured to monitor a position of an aircraft in relation to one or more other structures at an airport, associate an aircraft model with the position of the aircraft, associate one or more structure models with the one or more other structures, and show the aircraft model and the one or more structure models on the display.

## Description

### FIELD OF THE DISCLOSURE

Examples of the present disclosure generally relate to systems and methods for monitoring positions of aircraft at an airport, such as when taxiing between different locations.

### BACKGROUND OF THE DISCLOSURE

Aircraft are used to transport passengers and cargo between various locations. Numerous aircraft depart from and arrive at a typical airport every day.

A typical airport has various obstructions which an operator (such as a pilot) of an aircraft maneuvers around while taxiing to different locations. Fixed structures such as buildings, gates, light stanchions, signs, and the like are readily seen by an operator, and easily avoided. However, various vehicles, such as other aircraft, ground support vehicles, and the like are also at the airport.

In general, an operator of an aircraft is able to accurately judge conflicts with the obstructions that are ahead of the aircraft, and take necessary actions to avoid such obstructions. However, once a nose of the aircraft passes the obstruction, clearance of the remaining portion of the aircraft (wings and the tail) with the obstruction may pose a challenge because the operator may not be able to accurately judge clearance with portions of the aircraft that are not within a field of view.

### SUMMARY OF THE DISCLOSURE

A need exists for a system and a method for monitoring a position of an aircraft at an airport in relation to other structures. Further, a need exists for a system and a method for accurately, effectively, and efficiently allowing an operator of an aircraft to avoid conflicts (such as potential collisions) with other structures at an airport.

With those needs in mind, certain examples of the present disclosure provide a system including a user interface having a display. A control unit is configured to monitor a position of an aircraft in relation to one or more other structures at an airport, associate an aircraft model with the position of the aircraft, associate one or more structure models with the one or more other structures, and show the aircraft model and the one or more structure models on the display.

The one or more other structures can include one or more other aircraft, one or more fixed structures, and/or one or more ground vehicles. The one or more structure models can include one or more other aircraft models associated with the one or more aircraft, one or more fixed structure models associated with the one or more fixed structure, and/or one or more ground vehicle models associated with the one or more ground vehicles.

The user interface can be within a flight deck of the aircraft.

In at least one example, the aircraft model includes a three dimensional (3D) model of the aircraft. The 3D model provides geometrical information for the aircraft. The geometrical information includes a size, shape, length, height, and width of the exterior features of the aircraft, including a fuselage, wings, and tail.

In at least one example, the control unit is further configured to output an alert to the aircraft in response to detecting a conflict between the aircraft and the one or more other structures. For example, the control unit is configured to detect the conflict when the aircraft is within a predetermined distance of the one or more other structures.

In at least one example, the control unit is further configured to show an intended path graphic in relation to the aircraft model on the display. The control unit can be further configured to detect a conflict when the intended path graphic intersects one or both of the one or more other structures or another intended path graphic.

In at least one example, the control unit can be further configured to automatically control the aircraft in response to detecting a conflict with the one or more other structures.

The control unit can be an artificial intelligence or machine learning system.

Certain examples of the present disclosure provide a method including monitoring, by a control unit, a position of an aircraft in relation to one or more other structures at an airport; associating, by the control unit, an aircraft model with the position of the aircraft; associating, by the control unit, one or more structure models with the one or more other structures; and showing, by the control unit, the aircraft model and the one or more structure models on a display of a user interface.

Certain examples of the present disclosure provide a non-transitory computer-readable storage medium comprising executable instructions that, in response to execution, cause one or more control units comprising a processor, to perform operations including monitoring a position of an aircraft in relation to one or more other structures at an airport; associating an aircraft model with the position of the aircraft; associating one or more structure models with the one or more other structures; and showing the aircraft model and the one or more structure models on a display of a user interface.

### BRIEF DESCRIPTION OF THE DRAWINGS

Figure 1 illustrates a block diagram of a system for monitoring aircraft on ground paths of an airport, according to an example of the present disclosure.
Figure 2 illustrates a front view of a display, according to an example of the present disclosure.
Figure 3 illustrates a flow chart of a method, according to an example of the present disclosure.
Figure 4 illustrates a schematic block diagram of a control unit, according to an example of the present disclosure.
Figure 5 illustrates a perspective front view of an aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Examples of the present disclosure provide systems and methods that consider an actual geometry of an aircraft to provide an accurate representation (such as a virtual wireframe representation) of the aircraft on a display. The systems and methods compare the geometry of the aircraft in relation to geometries of obstructions (such as fixed structures, other aircraft, ground vehicles, and/or the like) proximate to (such as within 200 feet or less) the aircraft. The systems and methods are configured to output an alert to an operator (such as a pilot) of the aircraft if the aircraft is within a predetermined distance of another structure. In at least one example, the aircraft includes a display, such as within a flight deck or cockpit, that provides a visual projection of the state of the aircraft position, including areas behind a field of view of the operator, thereby allowing the operator to take any corrective measures, such as changing heading, reducing speed, holding a current position, or the like at appropriate times to ensure safe ground operations.

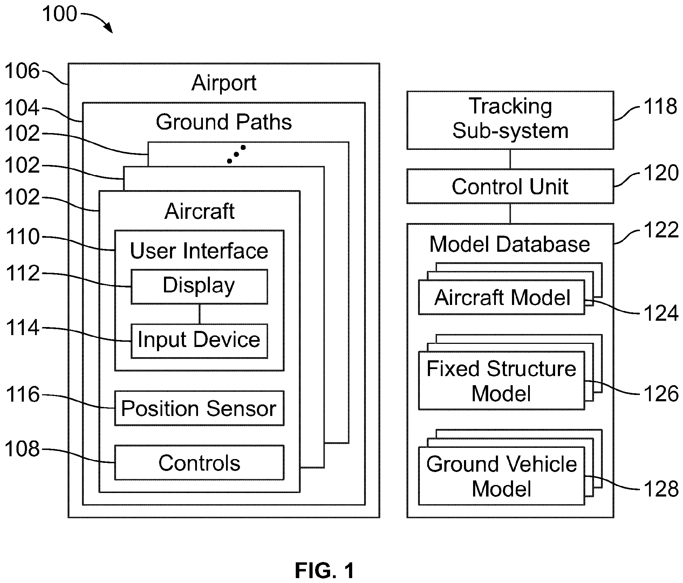

Figure 1 illustrates a block diagram of a system 100 for monitoring aircraft 102 on ground paths 104 of an airport 106, according to an example of the present disclosure. The ground paths 104 can include one or more parking areas proximate to gates, taxiways, runways, and the like.

Each aircraft 102 includes controls 108 configured to allow an operator, such as a pilot, to control operation of the aircraft 102. For example, the controls 108 include one or more of a control handle, yoke, joystick, control surface controls, accelerators, decelerators, and/or the like.

The aircraft 102 also includes a user interface 110, such as within a flight deck or cockpit of the aircraft 102. The user interface 110 includes a display 112 and an input device 114. The display 112 can be a monitor, screen, television, touchscreen, and/or the like. The input device 114 can include a keyboard, mouse, stylus, touchscreen interface (that is, the input device 114 can be integral with the display 112), and/or the like. The user interface 110 can be, or part of, a computer workstation. For example, the user interface 110 can be part of a flight computer within the flight deck or cockpit of the aircraft 102. As another example, the user interface 110 can be a handheld device, such as a smart phone, tablet, or the like.

The aircraft 102 also includes a position sensor 116, which outputs position signals. The position sensor 116 allows the aircraft 102 to be tracked by a tracking sub-system 118.

The system 100 also includes a control unit 120 in communication with the tracking sub-system 118, the aircraft 102 (such as with the user interface 110), and a model database 122, such as through one or more wireless connections. For example, the control unit 120 can communicate with the tracking sub-system 118, the user interface 110, and the model database 122 through one or more antennas, transceivers, and/or the like. The control unit 120 can be separate and distinct from the aircraft 102. For example, the control unit 120 can be at a central monitoring location, such as at the airport 106, or a location that is remote from the airport 106. The control unit 120 can be co-located with one or both of the tracking sub-system 118 and/or the model database 122. As another example, the control unit 120 can be remotely located from the tracking sub-system 118 and/or the model database 122. In at least one other example, the control unit 120 can be onboard an aircraft 102.

In at least one example, the control unit 120 can also be in communication with the controls 108 of the aircraft 102, and configured to automatically operate the controls 108, as described herein. Optionally, the control unit 120 may not be in communication with the controls 108, and may not be configured to automatically operate the aircraft 102.

The tracking sub-system 118 is configured to track positions of the aircraft 102 in real time. In at least one example, the tracking sub-system 118 is a radar sub-system. As another example, the tracking sub-system is an automatic dependent surveillance-broadcast (ADS-B) tracking sub-system. Real time positions of the aircraft 102 on the ground and within an airspace are detected by the tracking sub-system 118 that receives position signals output by the position sensors 116 of the various aircraft 102. For example, the tracking sub-system 118 receives ADS-B signals output by the position sensors 116 of the various aircraft 102. As another example, the position sensors 116 can be global positioning system sensors. The position sensors 116 output signals indicative of one or more of the position, altitude, heading, acceleration, velocity, and/or the like of the various aircraft 102. The signals are received by the tracking sub-system 118.

The tracking sub-system 118 is configured to track a current position of the aircraft 102. The control unit 120 monitors the position of the aircraft 102 through data received from the tracking sub-system 118. That is, the tracking sub-system 118 tracks the position of the aircraft 102, and the control unit 120 receives such data from the tracking sub-system 118. In at least one example, the tracking sub-system 118 is an ADS-B tracking sub-system. In such an example, the ADS-B tracking sub-system 118 determines a current position of an aircraft 102 via satellite navigation through a positional signal of the aircraft 102 output by the position sensor 116, which is received by one or more position receivers of the tracking sub-system 118. The position sensor 116 can be or include a transmitter that periodically outputs information about the aircraft 102, such as identification details, current position, current altitude, and current velocity. The tracking sub-system 118 receives the transmitted position signal from the position receivers to determine a current and real time position, heading, velocity, and the like of the aircraft 102.

The model database 122 includes data regarding various structures at the airport 106. The structures can be fixed structures and mobile structures. In at least one example, the model database 122 includes an aircraft model 124 associated with an aircraft 102 at the airport 106. The aircraft model 124 includes information regarding a size, shape, length, height, width, and the like of external features of the aircraft 102. In at least one example, the aircraft model 124 includes a three dimensional (3D) model of the aircraft 102, such as a 3D wireframe model. The 3D model of the aircraft 102 provides geometrical information for the aircraft 102, including a size, shape, length, height, width, and the like of the exterior features of the aircraft 102, including a fuselage, wings, tail, and the like.

The model database 122 can also include fixed structure models 126 for various fixed structures at the airport 106, such as buildings, light structures, signs, and the like. Optionally, the model database 122 may not include the fixed structure models.

The model database 122 can also include ground vehicle models 128 for various ground vehicles at the airport 106. The ground vehicles 128 can be tracked by the tracking sub-system 118. Optionally, the model database 122 may not include the ground vehicle models 128.

In operation, the aircraft 102 is tracked by the tracking sub-system 118. The control unit 120 receives the tracking data from the tracking sub-system 118 to determine a position of the aircraft 102 on the ground path(s) 104 at the airport 106. Based on the tracked position of the aircraft 102, the control unit 120 associates the aircraft model 124 with the tracked position of the aircraft 102. For example, the control unit 120 registers, overlays, superimposes, and/or the like the aircraft model 124 with the tracked position of the aircraft 102. The aircraft model 124 is scaled to fit to the tracked position to provide the physical dimensions of exterior portions of the aircraft 102, such as lengths, widths, and the like of the fuselage, the wings, the tail, and the like. The aircraft model 124 can be oriented based on the tracked position of the aircraft, such as ADS-B data, so that the front, rear, and sides of the aircraft model 124 coincide with the actual heading of the aircraft 102. The aircraft model 124 can provide a virtual representation of the 3D external features of the aircraft 102, including the fuselage, the wings, the tail, and the like. As another example, the aircraft model 124 can be a virtual representation showing the outer limits (such as length, and width) of the aircraft 102. In this example, the aircraft model 124 can be a circle or spherical representation that defines the outer limits of the aircraft 102.

In at least one example, the control unit 120 associates aircraft models 124 with each aircraft 102 at the airport 106. Optionally, the control unit 120 can associate aircraft models 124 for only other aircraft 102 within a predetermined distance from an aircraft 102, such as within 500 feet. Optionally, the predetermined distance can be less than 500 feet (such as 200 feet), or greater than 500 feet (such as 1000 feet). The control unit 120 can also associate fixed structure models 126 with known positions of structures at the airport 106, and/or ground vehicle models 128 for tracked positions of ground vehicles at the airport 106. Optionally, the control unit 120 associates only aircraft models 124 for various aircraft 102 at the airport 106. As another example, the control unit 120 associates aircraft models 124 for aircraft 102 at the airport 106 and ground vehicle models 128 for ground vehicles at the airport 106 (but not fixed structure models).

After determining the positions of the aircraft 102, and associating the aircraft model 124 for the aircraft 102, the control unit 120, which is in communication with the user interface 110, provides a virtual representation of the aircraft 102 on the display 112. In particular, the control unit 120 shows the aircraft model 124 of the aircraft 102 on the display 112. The aircraft model 124 is linked to the position of the aircraft 102 on the ground path(s) 104, which is tracked by the tracking sub-system 118. Thus, as the aircraft 102 moves on the ground path(s) 104, the aircraft model 124 as shown on the display 112 moves along with the tracked position in real time. The control unit 120 scales the aircraft model 124 to provide accurate dimensions on the display 112. The control unit 120 can also show the ground path(s) 104 on the display 112, as well as other structures, such as aircraft models 124 of other aircraft 102, fixed structure models 126 for fixed structures, and ground vehicle models 128 for tracked ground vehicles, and/or the like on the display 112. In this manner, an operator of the aircraft 102 can view the display 112 to determine whether the aircraft 102 has sufficient clearance between various other structures on the ground path(s) 104.

In at least one example, the control unit 120 can further output an alert to the aircraft 102 in response to detecting a conflict between the aircraft 102 and another structure. For example, the control unit 120 can output the alert when the aircraft 102 is within a predetermined distance of another structure. For example, if the aircraft 102 is within a predetermined distance of 50 feet of another structure, the control unit 120 can output an alert indicating a close distance to another structure, which can be shown as a graphic, text, and/or the like on the display 112, and/or output as an audio signal through a speaker within the flight deck or cockpit. Alternatively, the control unit 120 may not output alerts.

In at least one example, the control unit 120 can also provide an intended path graphic in relation to the aircraft model 124 for the aircraft 102 shown on the display 112. The intended path graphic can be a polygon that shows a future location of the aircraft 102 continuing on a current course for a predetermined period of time, such as 30 seconds or less. Optionally, the predetermined period of time can be less than 30 seconds (such as 10 seconds), or greater than 30 seconds (such as 1 minute or more). If the intended path graphic intersects with an intended path graphic of another aircraft 102 or ground vehicle as shown on the display through respective models, the control unit 120 can output an alert to the aircraft 102 regarding a potential conflict, thereby allowing the operator of the aircraft 102 to take a corrective action. Alternatively, the control unit 120 may not determine and show intended path graphics.

In at least one example, in response to the control unit 120 determining an actual or potential conflict between an aircraft 102 and another structure (such as another aircraft 102, a ground vehicle, and/or a fixed structure) on the ground path(s) 104 (such as by an intersection of intended ground paths, or the aircraft 102 and the structure being within a predetermined distance - such as 50 feet or less - of one another), the control unit 120 can automatically operate the aircraft 102 to ensure that the aircraft 102 does not contact the structure. For example, the control unit 120 can overtake the controls 108 to automatically operate the aircraft 102 to ensure that the aircraft 102 does not contact the structure. Optionally, the control unit 120 may not be configured to automatically control the aircraft 102.

As described herein, the system 100 includes the user interface 110 having the display 112. The control unit 120 is configured to monitor a position (such as tracked by the tracking sub-system 118) of an aircraft 102 in relation to one or more other structures at the airport 106. The control unit 120 is further configured to associate an aircraft model 124 with the position of the aircraft 102, associate one or more structure models (for example, models 124, 126, and/or 128) with the one or more other structures, and show the aircraft model 124 and the one or more structure models on the display 112. The one or more other structures include one or more other aircraft, one or more fixed structures, and/or one or more ground vehicles. The one or more structure models include one or more other aircraft models associated with the one or more aircraft, one or more fixed structure models associated with the one or more fixed structure, and/or one or more ground vehicle models associated with the one or more ground vehicles.

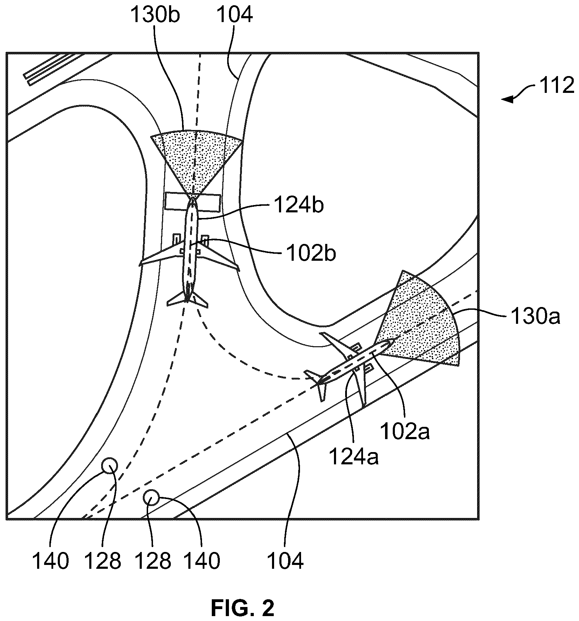

Figure 2 illustrates a front view of a display 112, according to an example of the present disclosure. Referring to Figures 1 and 2, the control unit 120 shows a virtual representation of an area of the airport 106, such as one or more ground paths 104 on which tracked positions 102a and 102b of different aircraft 102 can be shown. The control unit 120 provides (such as overlays, superimposes, or the like) the aircraft models 124a and 124b onto the tracked positions 102a and 102b, respectively. The control unit 120 can further show intended path graphics 130a and 130b in relation to the aircraft models 124a and 124b, respectively.

The control unit 120 can also show ground vehicle models 128 associated with ground vehicles 140 on the display 112. The ground vehicles 140 can be ground support vehicles at the airport 106, such as mobile fuel tankers, luggage handling vehicles, emergency vehicles (such as ambulances or fire trucks), and/or the like.

As described herein, the control unit 120 considers the exact geometry of the aircraft 102, and provides a representation of the aircraft 102 on the display 112, such as via the aircraft model 124. The control unit 120 compares such information with various other structures on the ground paths 104, such as other aircraft, ground vehicles, and fixed structures. In this manner, the control unit 120 provides precise and continuous information to an operator of the aircraft 102 to ensure collisions are avoided. The tracked data and associated models shown on the display 112 are continually updated based on changes of aircraft heading, relative positions and courses of other structures, and the like.

The aircraft model 124 shown on the display 112 provides an operator of the aircraft 102 a visual projection of the state of the aircraft 102 behind a field of view of the operator, which assists the operator in making corrective measures, such as changing heading, reducing speed, holding current position, and/or the like at appropriate times. The control unit 120 can also show the virtual representation to displays at other locations, such as air traffic control, to allow for improved monitoring, such as during times of low visibility.

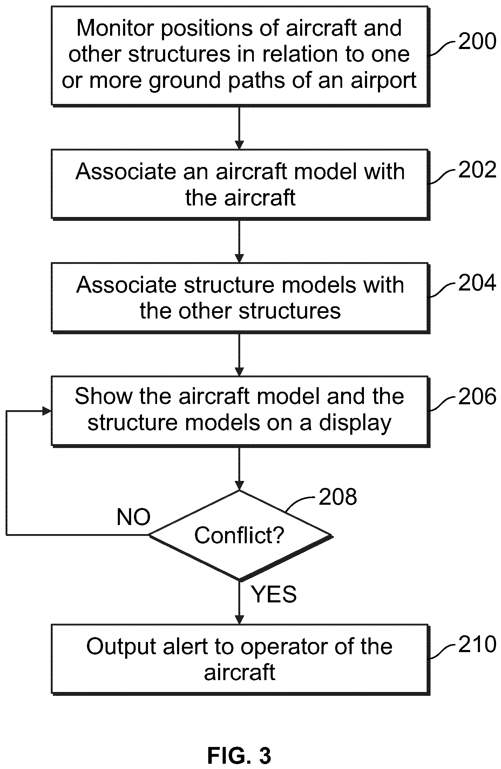

Figure 3 illustrates a flow chart of a method, according to an example of the present disclosure. Referring to Figures 1-3, at 200, the control unit 120 monitors positions of an aircraft 102 and other structures (such as other aircraft, ground vehicles, fixed structures, and the like) in relation to one or more ground paths 104 of an airport 106. At 202, the control unit 120 associates an aircraft model 124 with a tracked position of the aircraft 102. At 204, the control unit 120 associates structure models (such as other aircraft models, ground vehicle models, and/or fixed structure models) with the other structures. At 206, the control unit 120 then shows the aircraft model 124 and the structure models on the display 112, which can be in a flight deck or cockpit of the aircraft 102, at a remote monitoring location (such as air traffic control), and/or the like.

At 208, the control unit 120 determines if there is a conflict between the aircraft 102 and another structure. The conflict can be a separation distance that is less than a predetermined distance (such as 50 feet, 100 feet, or less), intersection of an intended path graphic with a structure, or another intended path graphic, and/or the like. If there is no conflict, the method returns to 208.

If, however, there is a conflict at 208, the method proceeds to 210, at which the control unit 120 outputs an alert (such as a visual and/or audio alert) to an operator of the aircraft 210. In at least one example, the control unit 120 can also automatically control the aircraft 102 (such as overtaking the controls 108) to maneuver the aircraft 102 out of the conflict.

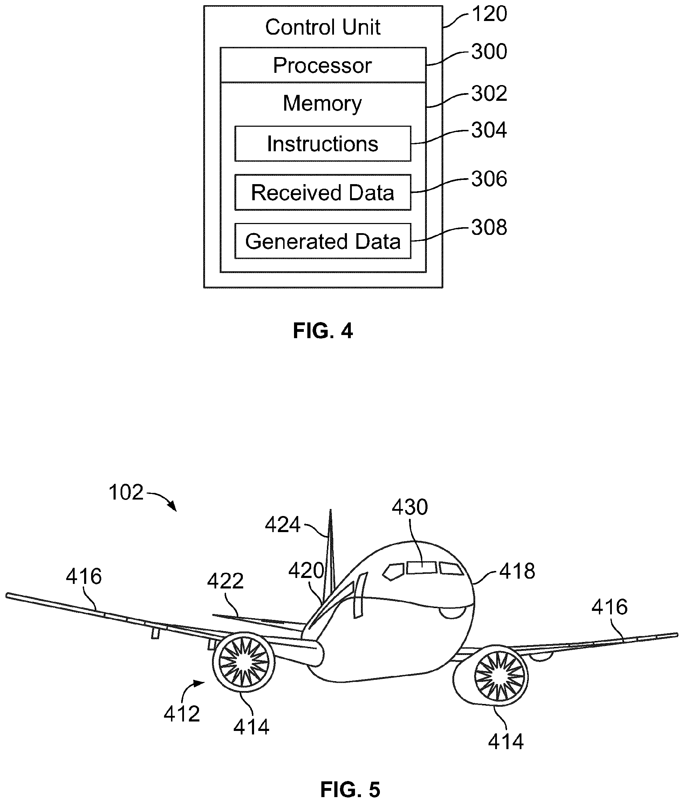

Figure 4 illustrates a schematic block diagram of the control unit 120, according to an example of the present disclosure. In at least one example, the control unit 120 includes at least one processor 300 in communication with a memory 302. The memory 302 stores instructions 304, received data 306, and generated data 308. The control unit 120 shown in Figure 4 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 120 may be or include one or more processors that are configured to control operation, as described herein.

The control unit 120 is configured to execute a set of instructions that are stored in one or more data storage units or elements (such as one or more memories), in order to process data. For example, the control unit 120 may include or be coupled to one or more memories. The data storage units may also store data or other information as desired or needed. The data storage units may be in the form of an information source or a physical memory element within a processing machine.

The set of instructions may include various commands that instruct the control unit 120 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 120. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 120 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Referring to Figures 1-4, examples of the subject disclosure provide systems and methods that allow large amounts of data to be quickly and efficiently analyzed by a computing device. For example, the control unit 120 can analyze various aspects of numerous aircraft 102 during a particular time period. As such, large amounts of data, which may not be readily discernable by human beings, are being tracked and analyzed. The vast amounts of data are efficiently organized and/or analyzed by the control unit 120, as described herein. The control unit 120 analyzes the data in a relatively short time in order to quickly and efficiently determine positions of various aircraft, and other structures at an airport, and to send alerts in response to detecting potential conflicts therebetween at appropriate times. As such, examples of the present disclosure provide increased and efficient functionality, and vastly superior performance in relation to a human being analyzing the vast amounts of data.

In at least one example, components of the system 100, such as the control unit 120, provide and/or enable a computer system to operate as a special computer system for providing virtual representations of aircraft in relation to other structures at an airport 106, and alerting operators of potential conflicts. The control unit 120 improves upon standard computing devices by determining such information and automatically communicating with operators of aircraft in an efficient and effective manner.

In at least one example, all or part of the systems and methods described herein may be or otherwise include an artificial intelligence (AI) or machine-learning system that can automatically perform the operations of the methods also described herein. For example, the control unit 120 can be an artificial intelligence or machine learning system. These types of systems may be trained from outside information and/or self-trained to repeatedly improve the accuracy with how data is analyzed to determine positions, associate models, output alerts and the like. Over time, these systems can improve by determining and communicating with increasing accuracy and speed, thereby significantly reducing the likelihood of any potential errors. For example, the AI or machine-learning systems can learn and determine models, associate such models with tracked positions, and determine potential conflicts. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data. Based on this feedback, the systems may be trained by adjusting one or more parameters, weights, rules, criteria, or the like, used in the analysis of the same. This process can be performed using the data and ensemble data instead of training data, and may be repeated many times to repeatedly improve the determinations and communications described herein. The training minimizes conflicts and interference by performing an iterative training algorithm, in which the systems are retrained with an updated set of data, and based on the feedback examined prior to the most recent training of the systems. This provides a robust analysis model that can better determine runway alerts in a cost effective and efficient manner.

Figure 5 illustrates a perspective front view of an aircraft 102, according to an example of the present disclosure. The aircraft 102 includes a propulsion system 412 that includes engines 414, for example. Optionally, the propulsion system 412 may include more engines 414 than shown. The engines 414 are carried by wings 416 of the aircraft 102. In other examples, the engines 414 may be carried by a fuselage 418 and/or an empennage 420. The empennage 420 may also support horizontal stabilizers 422 and a vertical stabilizer 424. The fuselage 418 of the aircraft 102 defines an internal cabin 430, which includes a flight deck or cockpit, one or more work sections (for example, galleys, personnel carry-on baggage areas, and the like), one or more passenger sections (for example, first class, business class, and coach sections), one or more lavatories, and/or the like. Figure 5 shows an example of an aircraft 102. It is to be understood that the aircraft 102 can be sized, shaped, and configured differently than shown in Figure 5.

Further, the disclosure comprises examples according to the following clauses:
Clause 1. A system comprising:
   a user interface comprising a display; and
   a control unit configured to:
      monitor a position of an aircraft in relation to one or more other structures at an airport,
      associate an aircraft model with the position of the aircraft,
      associate one or more structure models with the one or more other structures, and
      show the aircraft model and the one or more structure models on the display.
Clause 2. The system of Clause 1, wherein the one or more other structures comprise one or more other aircraft, one or more fixed structures, or one or more ground vehicles, and wherein the one or more structure models comprise one or more other aircraft models associated with the one or more aircraft, one or more fixed structure models associated with the one or more fixed structure, or one or more ground vehicle models associated with the one or more ground vehicles.
Clause 3. The system of Clauses 1 or 2, wherein the user interface is within a flight deck of the aircraft.
Clause 4. The system of any of Clauses 1-3, wherein the aircraft model comprises a three dimensional (3D) model of the aircraft, wherein the 3D model provides geometrical information for the aircraft, wherein the geometrical information includes a size, shape, length, height, and width of the exterior features of the aircraft, including a fuselage, wings, and tail.
Clause 5. The system of any of Clauses 1-4, wherein the control unit is further configured to output an alert to the aircraft in response to detecting a conflict between the aircraft and the one or more other structures.
Clause 6. The system of Clause 5, wherein the control unit is configured to detect the conflict when the aircraft is within a predetermined distance of the one or more other structures.
Clause 7. The system of any of Clauses 1-6, wherein the control unit is further configured to show an intended path graphic in relation to the aircraft model on the display.
Clause 8. The system of Clause 7, wherein the control unit is further configured to detect a conflict when the intended path graphic intersects one or both of the one or more other structures or another intended path graphic.
Clause 9. The system of any of Clauses 1-8, wherein the control unit is further configured to automatically control the aircraft in response to detecting a conflict with the one or more other structures.
Clause 10. The system of any of Clauses 1-9, wherein the control unit is an artificial intelligence or machine learning system.
Clause 11. A method comprising:
   monitoring, by a control unit, a position of an aircraft in relation to one or more other structures at an airport;
   associating, by the control unit, an aircraft model with the position of the aircraft;
   associating, by the control unit, one or more structure models with the one or more other structures; and
   showing, by the control unit, the aircraft model and the one or more structure models on a display of a user interface.
Clause 12. The method of Clause 11, wherein the one or more other structures comprise one or more other aircraft, one or more fixed structures, or one or more ground vehicles, and wherein the one or more structure models comprise one or more other aircraft models associated with the one or more aircraft, one or more fixed structure models associated with the one or more fixed structure, or one or more ground vehicle models associated with the one or more ground vehicles.
Clause 13. The method of Clauses 11 or 12, wherein the user interface is within a flight deck of the aircraft.
Clause 14. The method of any of Clauses 11-13, wherein the aircraft model comprises a three dimensional (3D) model of the aircraft, wherein the 3D model provides geometrical information for the aircraft, wherein the geometrical information includes a size, shape, length, height, and width of the exterior features of the aircraft, including a fuselage, wings, and tail.
Clause 15. The method of any of Clauses 11-14, further comprising outputting, by the control unit, an alert to the aircraft in response to detecting a conflict between the aircraft and the one or more other structures.
Clause 16. The method of Clause 15, wherein said detecting comprises determining that the aircraft is within a predetermined distance of the one or more other structures.
Clause 17. The method of any of Clauses 11-16, further comprising:
   showing, by the control unit, an intended path graphic in relation to the aircraft model on the display; and
   detecting, by the control unit, a conflict when the intended path graphic intersects one or both of the one or more other structures or another intended path graphic.
Clause 18. The method of any of Clauses 11-17, further comprising automatically controlling, by the control unit, the aircraft in response to detecting a conflict with the one or more other structures.
Clause 19. The method of any of Clauses 11-18, wherein the control unit is an artificial intelligence or machine learning system.
Clause 20. A non-transitory computer-readable storage medium comprising executable instructions that, in response to execution, cause one or more control units comprising a processor, to perform operations comprising:
   monitoring a position of an aircraft in relation to one or more other structures at an airport;
   associating an aircraft model with the position of the aircraft;
   associating one or more structure models with the one or more other structures; and
   showing the aircraft model and the one or more structure models on a display of a user interface.

As described herein, examples of the present disclosure provide systems and methods for monitoring a position of an aircraft at an airport in relation to other structures. Further, examples of the present disclosure provide systems and methods for accurately, effectively, and efficiently allowing an operator of an aircraft to avoid conflicts (such as potential collisions) with other structures (fixed and mobile) at an airport.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system (100) comprising:
a user interface (110) comprising a display (112); and
a control unit (120) configured to:
monitor a position of an aircraft (102) in relation to one or more other structures at an airport (106),
associate an aircraft (102) model with the position of the aircraft (102),
associate one or more structure models (126) with the one or more other structures, and
show the aircraft (102) model and the one or more structure models (126) on the display (112).

2. The system (100) of claim 1, wherein the one or more other structures comprise one or more other aircraft (102), one or more fixed structures, or one or more ground vehicles (128), and wherein the one or more structure models (126) comprise one or more other aircraft (102) models associated with the one or more aircraft (102), one or more fixed structure models (126) associated with the one or more fixed structure, or one or more ground vehicle models associated with the one or more ground vehicles (128).

3. The system (100) of claim 1 or 2, wherein the aircraft (102) model comprises a three-dimensional, 3D, model of the aircraft (102), wherein the 3D model provides geometrical information for the aircraft (102), wherein the geometrical information includes a size, shape, length, height, and width of the exterior features of the aircraft (102), including a fuselage, wings, and tail.

4. The system (100) of any preceding claim, wherein the control unit (120) is further configured to output an alert to the aircraft (102) in response to detecting a conflict between the aircraft (102) and the one or more other structures.

5. The system (100) of claim 4, wherein the control unit (120) is configured to detect the conflict when the aircraft (102) is within a predetermined distance of the one or more other structures.

6. The system (100) of any preceding claim, wherein the control unit (120) is further configured to show an intended path graphic in relation to the aircraft (102) model on the display (112).

7. The system (100) of claim 6, wherein the control unit (120) is further configured to detect a conflict when the intended path graphic intersects one or both of the one or more other structures or another intended path graphic.

8. The system (100) of any preceding claim, wherein the control unit (120) is further configured to automatically control the aircraft (102) in response to detecting a conflict with the one or more other structures.

9. A method comprising:
monitoring, by a control unit (120), a position of an aircraft (102) in relation to one or more other structures at an airport (106);
associating, by the control unit (120), an aircraft (102) model with the position of the aircraft (102);
associating, by the control unit (120), one or more structure models (126) with the one or more other structures; and
showing, by the control unit (120), the aircraft (102) model and the one or more structure models (126) on a display (112) of a user interface (110).

10. The method of claim 9, wherein the one or more other structures comprise one or more other aircraft (102), one or more fixed structures, or one or more ground vehicles (128), and wherein the one or more structure models (126) comprise one or more other aircraft (102) models associated with the one or more aircraft (102), one or more fixed structure models (126) associated with the one or more fixed structure, or one or more ground vehicle models associated with the one or more ground vehicles (128).

11. The method of claim 9 or 10, wherein the aircraft (102) model comprises a three-dimensional, 3D, model of the aircraft (102), wherein the 3D model provides geometrical information for the aircraft (102), wherein the geometrical information includes a size, shape, length, height, and width of the exterior features of the aircraft (102), including a fuselage, wings, and tail.

12. The method of any of claims 9-11, further comprising outputting, by the control unit (120), an alert to the aircraft (102) in response to detecting a conflict between the aircraft (102) and the one or more other structures.

13. The method of claim 12, wherein said detecting comprises determining that the aircraft (102) is within a predetermined distance of the one or more other structures.

14. The method of any of claims 9-13, further comprising:
showing, by the control unit (120), an intended path graphic in relation to the aircraft (102) model on the display (112); and
detecting, by the control unit (120), a conflict when the intended path graphic intersects one or both of the one or more other structures or another intended path graphic.

15. The method of any of claims 9-14, further comprising automatically controlling, by the control unit (120), the aircraft (102) in response to detecting a conflict with the one or more other structures.
